# EUROPEAN PATENT APPLICATION

(11) **EP 4 797 038 A1**
(43) Date of publication of application: **26.08.2026**
(21) Application number: 25857972.1
(22) Date of filing: 13.06.2025
(51) Int. Cl.: G06F 1/12, G06F 1/10

(54) **CROSS-DIE CLOCK SYNCHRONIZATION SYSTEM, DIE, AND ELECTRONIC DEVICE**

(30) Priority: 09.01.2025 CN 202510046909
(71) Applicant: Hygon Information Technology Co., Ltd., Binhai New Area, Tianjin 300392 (CN)
(72) Inventor: WU, Rui, Binhai New Area, Tianjin 300392 (CN); WEI, Yingxu, Binhai New Area, Tianjin 300392 (CN)
(74) Representative: Bergenstråhle & Partners AB
(86) International application number: PCT/CN2025/100801
(87) International publication number: WO 2026/148793

(57) **Abstract**

The present application relates to systems, chips, and electronic devices for cross-chip clock synchronization are provided. The clock synchronization system comprises a first clock adjustment link, a second clock adjustment link and a clock phase difference detection module; The first clock adjustment link is configured to adjust a phase delay of the input clock signal and generate a first clock signal based on the adjusted input clock signal; A first clock adjustment link spanning two chips, the first clock adjustment link includes a first cross-chip transmission circuit; the second clock adjustment link is configured to adjust a phase delay of the input clock signal and generate a second clock signal based on the adjusted input clock signal; the second clock adjustment link includes a delay replication circuit, transmission delay of the first cross-chip transmission circuit being consistent with the transmission delay of the delay replication circuit; the clock phase difference detection module is configured to detect a phase difference between the first clock signal and the second clock signal. The present application can reduce clock skew between cross-chips.

## Description

### RELATED APPLICATION

This present disclosure claims priority to Chinese patent with application number 202510046909.9, entitled of " systems, chips and electronic devices for cross-chip clock synchronization ", which was submitted on January 9, 2025, the entire contents of which is incorporated herein by reference.

### TECHNICAL FIELD

The present disclosure relates to the technical field of electronic circuits, and in particular to systems, chips and electronic devices for cross-chip clock synchronization.

### BACKGROUND

In cross-chip application scenarios, data and clock interaction is required between chips. In some cases, chip 1 (diel) and chip 2 (die2) are synchronous clocks. However, since the two clocks are distributed in different chips, and different chips may have a large clock skew due to differences in manufacturing processes and manufacturing process angles, the clocks of chip 1 and chip 2 may have a large clock skew, which may encounter timing issues when transmitting synchronous data. For example, if the flip-flop in diel sends data to the flip-flop in die2 based on the clk1 clock, and the flip-flop in die2 receives data based on the clk2 clock, alternatively, the flip-flop in die2 sends data to the flip-flop in diel based on the clk2 clock, and the flip-flop in diel receives data based on the clk1 clock, an excessive clock skew between clk1 and clk2 may result in the failure to simultaneously meet the setup and hold requirements for the flip-flop timing .

In the prior art, clock alignment is mainly achieved through a delay phase-locked loop (DLL). The disadvantage of the delayed DLL clock alignment technology is that it introduces a clock cycle difference, for example, a one-clock-cycle difference between the aligned clock clk2 and the reference clock clk1. In some scenarios (such as dynamic frequency modulation scenarios), the clock cycle difference introduced by delayed DLL clock alignment technology is not allowed.

### SUMMARY

In view of this, an object of the present application is to provide systems, chips, and electronic devices for cross-chip clock synchronization to reduce clock skew caused by cross-chip transmission.

Embodiments of the present application are implemented as follows:
According to a first aspect, an embodiment of the present disclosure provides a cross-chip clock synchronization system, comprising: a first clock adjustment link, a second clock adjustment link, and a clock phase difference detection module; the first clock adjustment link configured to adjust a phase delay of an input clock signal and generate a first clock signal based on an adjusted input clock signal; the first clock adjustment link is cross connected between two chips, the first clock adjustment link includes a first cross-chip transmission circuit, the first cross-chip transmission circuit is used for transmitting a target clock signal and/or the first clock signal, the target clock signal is the input clock signal or the adjusted input clock signal; the second clock adjustment link configured to adjust phase delay of the input clock signal and generate a second clock signal based on adjusted input clock signal; the second clock adjustment link includes a delay replication circuit, a transmission delay of the first cross-chip transmission circuit is consistent with a transmission delay of the delay replication circuit; a clock phase difference detection module respectively connected to the first clock adjustment link and the second clock adjustment link , wherein the clock phase difference detection module is configured to detect a phase difference between the first clock signal and the second clock signal to obtain a first detection value; Wherein the first detection value is used to adjust a phase delay of the first clock adjustment link and/or the second clock adjustment link to synchronize the phases of the first clock signal and the second clock signal.

In the above embodiment, by introducing the delay replication circuit into the second clock adjustment link, since the transmission delay of the first cross-chip transmission circuit is consistent with the transmission delay of the delay replication circuit, the delay influence increased by introducing the first cross-chip transmission circuit in the first clock adjustment link is canceled out, so that only one clock phase difference detection module can accurately detect the phase difference of the clock signals output by the first clock adjustment link and the second clock adjustment link and obtain the first detection value, thereby adjusting the phase delay of the first clock adjustment link according to the first detection value, so that the phase delay of the first clock adjustment link and the second clock adjustment link and the second clock adjustment link can be adjusted according to the first detection value.

In connection with a possible embodiment of the embodiment of the first aspect, the two chips comprise: a first chip and a second chip; the clock phase difference detection module is located in the second chip, the second chip is configured to generate the input clock signal, and the first clock adjustment link includes two first cross-chip transmission circuits, wherein one of the first cross-chip transmission circuits is configured to transmit the target clock signal, and the other of the first cross-chip transmission circuits is configured to transmit the second clock signal.

In the above embodiment, when the clock phase difference detection module is located in the second chip and the input clock signal is generated by the second chip, two first cross-chip transmission circuits may be provided, one of which is used for transmitting the target clock signal and the other is used for transmitting the second clock signal, so that the first clock adjustment links can be distributed in the two chips and the cross-chip design can be realized.

In connection with a possible embodiment of the embodiment of the first aspect, the first clock adjustment link may include a first clock delay adjustment circuit, one of the first cross-chip transmission circuits, the first clock network, and the other of the first cross-chip transmission circuits connected in sequence; alternatively, the first clock adjustment link may include one of the first cross-chip transmission circuits, a first clock delay adjustment circuit, a first clock network, and the other of the first cross-chip transmission circuits connected in sequence; the first clock delay adjustment circuit configured to adjust a phase delay of an input clock signal; the first clock network configured to generate the first clock signal based on the adjusted input clock signal.

In the above embodiment, the first clock adjustment link may include the above two structures to meet the needs of different scenarios, adjust the phase delay of the input clock signal by introducing a first clock delay adjustment circuit to ensure phase synchronization of the first clock signal and the second clock signal, and meanwhile introducing a first clock network to generate a clock signal with stronger driving capability, thereby improving the driving capability and stability of the system.

In connection with a possible embodiment of the embodiment of the first aspect, the second clock adjustment link may include a second clock delay adjustment circuit, one of the delay replication circuits, a second clock network, and the other of the delay replication circuits connected in sequence; alternatively, the second clock adjustment link may include one of the delay replication circuits, a second clock delay adjustment circuit, a second clock network, and the other of the delay replication circuits connected in sequence; the second clock delay adjustment circuit is configured to adjust a phase delay of an input clock signal; the second clock network is configured to generate the second clock signal based on the adjusted input clock signal.

In the above embodiment, the second clock adjustment link may include the above two structures. Since the first clock adjustment link includes two cross-chip transmission circuits, two delay replication circuits are also introduced into the second clock adjustment link to cancel the influence of the cross-chip transmission circuit on the delay. At the same time, the second clock delay adjustment circuit is introduced to adjust the phase delay of the input clock signal to ensure the phase synchronization of the first clock signal and the second clock signal, and the second clock network is introduced to generate a clock signal with stronger driving ability, thereby improving the driving ability and stability of the system.

In connection with a possible embodiment of the embodiment of the first aspect, the two chips comprise: a first chip and a second chip; the clock phase difference detection module is located in the first chip, and the second chip is used to generate the input clock signal; the second clock adjustment link is cross connected between two chips, and the delay replication circuit is a second cross-chip transmission circuit, and the second cross-chip transmission circuit is used to transmit the second clock signal.

In the above embodiment, if the clock phase difference detection module is located in the first chip and the second chip is used to generate the input clock signal, the delay replication circuit may adopt a cross-chip transmission circuit design, so that the second clock adjustment link can be distributed in two chips to realize the cross-chip design.

In combination with a possible embodiment of the embodiment of the first aspect, a reference clock input terminal of the clock phase difference detection module is configured to receive the second clock signal, and a feedback clock input terminal of the clock phase difference detection module is configured to receive the first clock signal; if a product of the first detection value and the detection accuracy of the clock phase difference detection module is positive, it indicates that that the phase of the second clock signal leads the phase of the first clock signal; if the product of the first detection value and the detection accuracy of the clock phase difference detection module is a negative value, it indicates that the phase of the second clock signal lags behind with respect to the phase of the first clock signal\.

In the above-described embodiment, the phase relationship between the first clock signal and the second clock signal can be quickly determined in the above-described manner, and the efficiency can be improved.

In combination with a possible embodiment of the embodiment of the first aspect, the clock phase difference detection module is further configured to detect a phase difference between the frequency division signal and the delay signal of the target reference signal to obtain a second detection value; wherein the delayed signal is obtained by delaying the frequency division signal by N times the clock cycle of the target reference signal, and N is a positive number greater than 0; The second detection value is used to determine the detection accuracy of the clock phase difference detection module.

In the above embodiment, due to the deviation of the measurement accuracy of the clock phase difference detection module in different environments (such as the change of voltage on the path, the deviation of frequency response or the difference of temperature), the detection accuracy of the clock phase difference detection module can be accurately obtained by measuring the phase difference between two signals with known phase difference, so as to synchronize the phases of the first clock signal and the second clock signal as much as possible.

In combination with a possible embodiment of the embodiment of the first aspect, the clock synchronization system further may include a control module connected to the clock phase difference detection module, the first clock adjustment link, and the second clock adjustment link, respectively, the control module may be configured to adjust a phase delay of the first clock adjustment link and/or the first clock adjustment link according to the first detection value to synchronize the phases of the first clock signal and the second clock signal.

In the above embodiment, the control module is introduced to adjust the first clock adjustment link and/or the phase delay of the first clock adjustment link according to the first detection value, so that the phases of the first clock signal and the second clock signal are synchronized, so that there is no need to interact with the external device in real time, which is beneficial to improving the timeliness of control and thus improving the adjustment efficiency.

In a second aspect, an embodiment of the present application further provides a chip, including a first chip, a second chip, and a clock synchronization system according to any possible embodiment of the embodiment of the first aspect, wherein the first clock adjustment link in the clock synchronization system is cross connected between the first chip and the second chip.

In a third aspect, an embodiment of the present application further provides an electronic device including a chip as provided in the embodiment of the second aspect.

Other features and advantages of the present application will be set forth in the following specification. The objects and other advantages of the present application can be achieved and obtained by the structures particularly pointed out in the written specification and the accompanying drawings.

### BRIEF DESCRIPTION OF DRAWINGS

In order to more clearly explain the embodiments of the present application or the technical solutions in the prior art, the drawings that need to be used in the embodiments will be briefly introduced below, and it is obvious that the drawings in the following description are only some embodiments of the present application, and other drawings can be obtained by those skilled in the art according to these drawings. The above and other objects, features and advantages of the present application will become more apparent from the accompanying drawings.
FIG.1 illustrates a schematic structural diagram of a cross-chip clock synchronization system according to an embodiment of the present disclosure;
FIG. 2 is a schematic diagram showing a relationship between a delay between an input and an output of a clock delay adjustment circuit) and a control word according to an embodiment of the present application; FIG. 3a illustrates a first layout diagram of a clock synchronization system according to an embodiment of the present application;
FIG. 3b illustrates a second layout diagram of the clock synchronization system according to an embodiment of the present disclosure;
FIG. 4a illustrates a third layout schematic diagram of the clock synchronization system according to an embodiment of the present disclosure;
FIG. 4b illustrates a fourth layout diagram of the clock synchronization system according to an embodiment of the present disclosure;
FIG. 5 illustrates a schematic structural diagram of a cross-chip transmission circuit according to an embodiment of the present disclosure;
FIG. 6 illustrates a schematic diagram showing a relationship between an input signal and an output value of a clock phase difference detection module according to an embodiment of the present disclosure;
FIG. 7 illustrates a schematic principle diagram of a cross-chip clock synchronization system according to an embodiment of the present disclosure;
FIG. 8 illustrates a schematic diagram of a principle of adjusting clock skew by a control module according to an embodiment of the present disclosure;
FIG. 9 illustrates a schematic structural diagram of an electronic device according to an embodiment of the present disclosure.

### DESCRIPTION OF EMBODIMENTS

Hereinafter the technical solutions in the embodiments of the present application will be described with reference to the drawings in the embodiments of the present application. Obviously, the described embodiments are merely part of embodiments not all of the embodiments. The following examples can be used as examples to more clearly explain the technical solutions of the present application, and cannot limit the scope of protection of the present application. It will be understood by those skilled in the art that the following embodiments and features in the embodiments may be combined with each other without conflict.

It should be noted that like reference numerals and letters refer to like items in the following drawings, and therefore, once an item is defined in one drawing, it is not necessary to be further defined and explained in the following drawings. Meanwhile, relational terms such as "first," "second," etc. in the description of this application are used only to distinguish one entity or operation from another entity or operation, and do not necessarily require or imply that any such actual relationship or order exists between these entities or operations. Moreover, the terms "comprising," and "having" or any variations thereof are intended to encompass a non-exclusive inclusion, such as, for example, a process, article, or apparatus that includes a series of elements includes not only those elements, but also other elements that are not explicitly listed, or elements inherent to such a process, article, or apparatus.

Furthermore, the term "and/or" in the present application is merely an association relationship describing an association object, and indicates that there may be three kinds of relationships, for example, A and/or B, which may indicate that A exists alone, A and B exist simultaneously, and B exists alone.

In the description of the embodiments of the present application, unless otherwise explicitly specified and limited, the technical term "connection" may be direct connection or indirect connection through an intermediary.

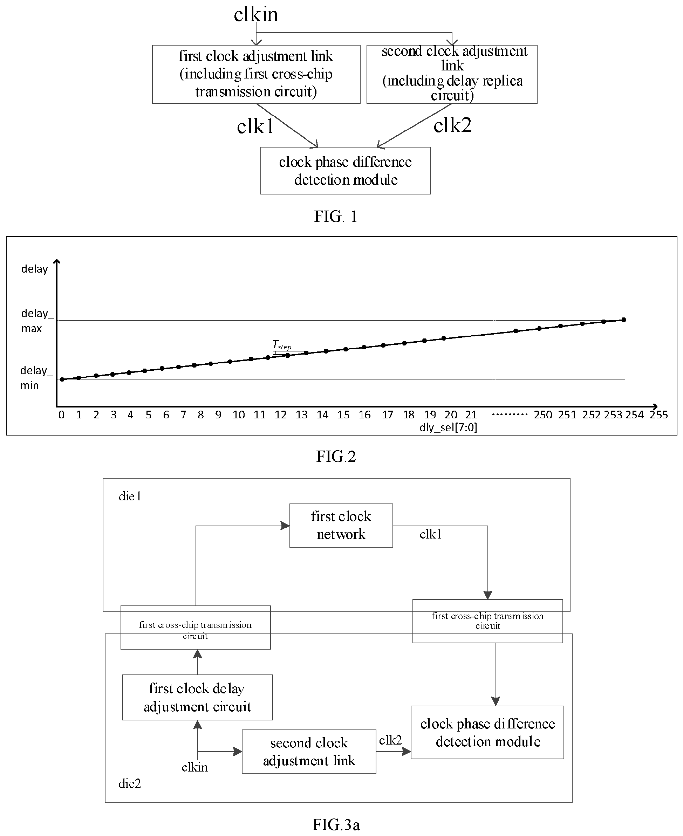

In view of the shortcomings of the existing delay phase-locked loop clock alignment technology, the present application proposes a cross-chip clock alignment scheme, which can reduce clock skew caused by cross-chip transmission, reduce clock skew caused by different manufacturing processes, reduce clock skew caused by different manufacturing process angles, and do not introduce clock cycle difference. Hereinafter, a cross-chip clock synchronization system according to an embodiment of the present application will be described with reference to FIG. 1.

As shown in FIG. 1, the clock synchronization system includes a first clock adjustment link, a second clock adjustment link, and a clock phase difference detection module. The clock phase difference detection module is respectively connected to the first clock adjustment link and the second clock adjustment link.

The first clock adjustment link is configured to adjust a phase delay of an input clock signal (e.g., denoted by clkin) and generate a first clock signal (e.g., denoted by clk1) based on an adjusted input clock signal. The second clock adjustment link is configured to adjust the phase delay of the input clock signal and generate a second clock signal (e.g., denoted by clk2) based on the adjusted input clock signal. The clock phase difference detection module is configured to detect a phase difference between the first clock signal and the second clock signal to obtain a first detection value.

The first detection value is used to adjust a phase delay of the first clock adjustment link and/or the second clock adjustment link to synchronize (or align) the phases of the first clock signal and the second clock signal. A phase relationship of the first clock signal with respect to the second clock signal can be learned from the first detection value. When adjusting the phase delay of the first clock adjustment link and/or the second clock adjustment link to synchronize the phases of the first clock signal and the second clock signal, control the first clock adjustment link to increase the phase delay and/or controlling the second clock adjustment link to decrease the phase delay if the first clock signal leads of the phase of the second clock signal; if the first clock signal lags behind in phase with respect to the second clock signal, control the first clock adjustment link to decrease the phase delay, and/or control the second clock adjustment link to increase the phase delay.

The phase synchronization of the first clock signal and the second clock signal in the present disclosure does not mean that the phases between the first clock signal and the second clock signal must be equal or aligned, but may mean that the phases between the first clock signal and the second clock signal are as equal as possible, or the phase relationship between the two is as determined as possible, for example, the first clock signal is always faster (or slower) than the second clock signal for a certain time.

A first clock adjustment link is cross between two chips (including a first chip and a second chip), and the first clock adjustment link includes a first cross-chip transmission circuit for transmitting a target clock signal and/or a first clock signal, wherein the target clock signal is an input clock signal or an adjusted input clock signal. Signal transmission across two chips is achieved by introducing a first cross-chip transmission circuit.

The second clock adjustment link includes a delay replication circuit, a transmission delay of the first cross-chip transmission circuit is consistent with the transmission delay of the delay replication circuit, and the delay influence of the first cross-chip transmission circuit can be cancelled by introducing the delay replication circuit into the second clock adjustment link since the transmission delay of the first cross-chip transmission circuit is consistent with the transmission delay of the delay replication circuit. In some possible embodiments, circuit structure of the delay replication circuit may be the same as the circuit structure of the first cross-chip transfer circuit. In some possible embodiments, the delay duplicate circuit may also be implemented with an inverter, as long as it is ensured that the transmission delay of the delay duplicate circuit is consistent with the transmission delay of the first cross-chip transmission circuit.

A circuit cross between two chips is generally referred to as "cross-chip design" in circuit design, which involves distributing a complete circuit system on two or more physical chips instead of integrating it on a single chip.

Furthermore, the first clock adjustment link and the second clock adjustment link further comprise a clock delay adjustment circuit and a clock mesh. The clock delay adjustment circuit in the first clock adjustment link may be referred to as a first clock delay adjustment circuit, and the clock delay adjustment circuit in the second clock adjustment link may be referred to as a second clock delay adjustment circuit; similarly, the clock network in the first clock adjustment link may be referred to as a first clock network, and the clock network in the second clock adjustment link may be referred to as a second clock network. The structure of the first clock adjustment link and the second clock adjustment link is similar, but there may be clock skew between the first clock signal and the second clock signal due to the difference of manufacturing process and the difference of manufacturing process angle. Therefore, delay of the clock is adjusted by introducing the clock delay adjustment circuit into the first clock adjustment link and the second clock adjustment link, and finally the phase synchronization of the first clock signal and the second clock signal is guaranteed.

The first clock delay adjustment circuit is configured to adjust the phase delay of the input clock signal, which may be to increase or decrease the phase delay of the input clock signal. The first clock network is configured to generate a first clock signal based on the adjusted input clock signal, wherein driving capability of the first clock signal is stronger than the driving capability of the input clock signal, that is, the first clock network is configured to generate a clock signal with stronger driving capability based on the adjusted input clock signal.

The second clock delay adjustment circuit is configured to adjust a phase delay of the input clock signal, which may be to increase or decrease the phase delay of the input clock signal. The second clock network is configured to generate a second clock signal based on the adjusted input clock signal, wherein driving capability of the second clock signal is stronger than the driving capability of the input clock signal, that is, the second clock network is configured to generate a clock signal with stronger driving capability based on the adjusted input clock signal. The main function of the aforementioned first clock delay adjustment circuit and the second clock delay adjustment circuit is to adjust the delay between their respective input clock and output clock under the control of a control word (for example, represented by dlysel [7: 0]). Frequency range can be 100MHz ~ 5000MHz, the adjustment step size may approximately be 2ps, and output duty cycle ranges from 45% ~ 55%. Define *Tₛₜₑₚ* as a adjustment step of the first clock delay adjustment circuit (or the second clock delay adjustment circuit), then the delay between the input clock and the output clock is: $delay = {T}_{step} ∗ dlysel \left[7: 0\right] + delay 0$

dlysel [7: 0] is the control word, and delay0 is an initial delay. Delay _ min and delay _ max are defined as a minimum delay and a maximum delay of the first clock delay adjustment circuit (or the second clock delay adjustment circuit), respectively, and delay _ min ≈ 100 ps and delay _ max ≈ 500 ps in the present disclosure. The correspondence between the delay delay between the input clock and the output clock of the first clock delay adjustment circuit (or the second clock delay adjustment circuit) and the control word dlysel [7: 0] may be as shown in FIG. 2. Here, the control word dlysel [7: 0] that controls the first clock delay adjustment circuit and the second clock delay adjustment circuit may not be limited to 8 bits in the above example, and may be another bit.

The first clock delay adjustment circuit and the second clock delay adjustment circuit described above may include a delay unit for adjusting delay, and the delay unit may be implemented by a delay unit in the related art. The above-described first clock network and the second clock network may adopt a clock network according to the related art.

In a first embodiment, the above two chips include a first chip (such as die1) and a second chip (such as die2), the clock phase difference detection module may be located in the second chip, and the second chip may include a clock source for generating an input clock signal clkin. Meanwhile, the one first clock adjustment link includes two first cross-chip transmission circuits, wherein one of the first cross-chip transmission circuit is configured to transmit the target clock signal and anther of the first cross-chip transmission circuit is configured to transmit the second clock signal.

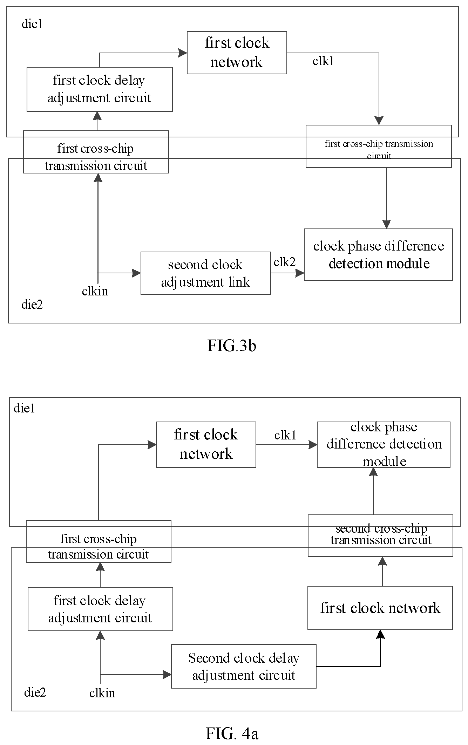

In a first embodiment, as shown in FIG. 3a, the first clock adjustment link includes a first clock delay adjustment circuit, one of the first cross-chip transmission circuit, a first clock network, and the other first cross-chip transmission circuit connected in sequence. At this time, one of the first cross-chip transfer circuit is configured to transmit the adjusted input clock signal, and the other first cross-chip transfer circuit is configured to transmit the first clock signal. Alternatively, as shown in FIG. 3b, the first clock adjustment link includes one first cross-chip transmission circuit, a first clock delay adjustment circuit, a first clock network, and the other first cross-chip transmission circuit connected in sequence. At this time, one first cross-chip transfer circuit is configured to transmit the input clock signal, and the other first cross-chip transfer circuit is configured to transmit the first clock signal.

In a first embodiment, the second clock adjustment link may include a second clock delay adjustment circuit, one of the delay replication circuit, a second clock network, and the other delay replication circuit connected in sequence; alternatively, the second clock adjustment link may include a delay replication circuit, a second clock delay adjustment circuit, a second clock network, and the other delay replication circuit connected in sequence.

In a second embodiment, the two chips include: a first chip and a second chip; the clock phase difference detection module may be located in the first chip, and the second chip may include a clock source for generating an input clock signal. At this time, the second clock adjustment link is cross between the two chips, and the delay replication circuit is a second cross-chip transmission circuit, and the second cross-chip transmission circuit is used to transmit the second clock signal.

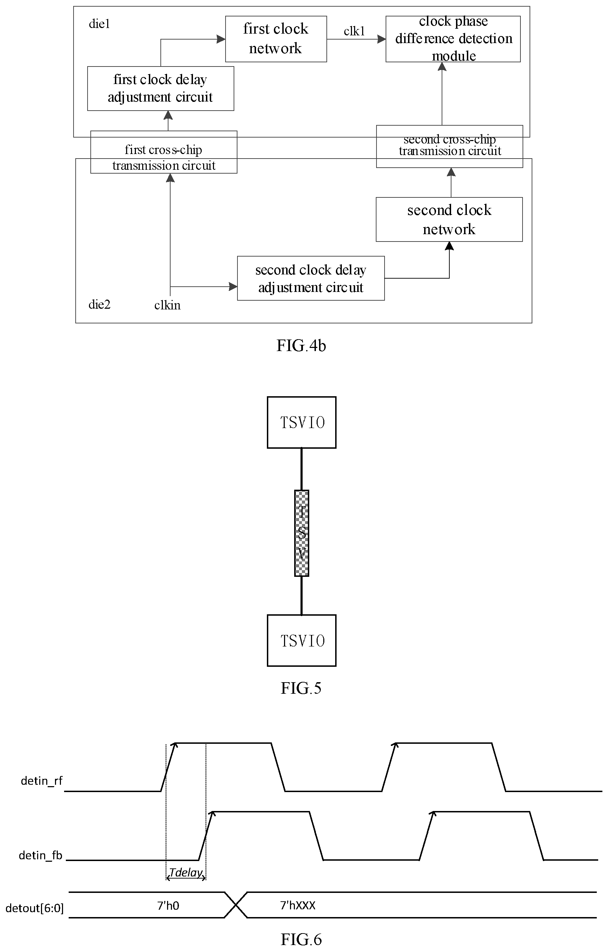

In a second embodiment, the second clock adjustment link may include a second clock delay adjustment circuit, a second clock network, and a second cross-chip transmission circuit connected in sequence. In one possible embodiment, as shown in FIG. 4a, the first clock adjustment link may include a first clock delay adjustment circuit, a first cross-chip transmission circuit, and a first clock network connected in sequence. Alternatively, as shown in FIG. 4b, the first clock adjustment link may include a first cross-chip transmission circuit, a first clock delay adjustment circuit, and a first clock network connected in sequence.

In some possible embodiments, the above-described second chip and the first chip may be independent large chips, and different chips implement different functions. In some possible embodiments, the second chip and the first chip described above may also be sub-chips under a large chip, and the large chip may include a plurality of chiplets. For example, the large chip may be a processor, and both the first chip and the second chip may be functional chips inside the processor.

In one possible embodiment, both the first cross-chip transfer circuit and the second cross-chip transfer circuit may be a cross-chip transfer circuit implemented by a Through Silicon Via (TSV) technology. TSV is a technology that opens holes in a silicon wafer to allow electrical signals to be transmitted vertically between different layers of the chip. Through TSV technology, chips may achieve multi-layer chip stacking through vertical electrical interconnections, significantly improving interconnect density and integration of the chip and reducing signal delay and power consumption.

Both the first cross-chip transmission circuit and the second cross-chip transmission circuit may include a TSV via, TSVIO interfaces located on both sides of the TSV via, and the TSVIO interfaces are connected to the TSV via, and the schematic diagram thereof is shown in FIG. 5.

A reference clock input (e.g. denoted by detin _ rf) of the clock phase difference detection module described above is configured to receive the second clock signal clk2, and a feedback clock input (e.g. denoted by detin _ fb) of the clock phase difference detection module is configured to receive the first clock signal clk1. If a product of the first detection value and the detection accuracy of the clock phase difference detection module is a positive value, it indicates that the phase of the second clock signal leads the phase of the first clock signal; if the product of the first detection value and the detection accuracy of the clock phase difference detection module is a negative value, it indicates that the phase of the second clock signal lags behind the phase of the first clock signal. Of course, the reference clock input terminal of the clock phase difference detection module may also be used to receive the first clock signal clk1, and the feedback clock input terminal of the clock phase difference detection module may also be used to receive the second clock signal clk2. At this time, if the product of the first detection value and the detection accuracy of the clock phase difference detection module is a negative value, it indicates that the phase of the second clock signal leads the phase of the first clock signal. If the product of the first detection value and the detection accuracy of the clock phase difference detection module is a positive value, it indicates that the phase of the second clock signal lags behind the phase of the first clock signal.

Assume that Tᵣₑₛ is the detection accuracy of the clock phase difference detection module, *tdₜₛᵥ* is the delay of the first cross-chip transmission circuit (or the delay copy circuit), and *detout* is the first detection value; the phase of the detin_rf terminal is: ${ph}_{clk 2} + {td}_{tsv ;}$ ${T}_{res} ∗ detout = \left({ph}_{clk 1}+{td}_{tsv}\right) - \left({ph}_{clk 2}+{td}_{tsv}\right) ,$

After canceling out *td*_{*t*s*v*} and simplifying, we get: *ph*_{*clk*1} - *ph*_{*clk*2} = *Tᵣₑₛ* ∗ *detout*code = *Tᵣₑₛ* ∗ *detout*, define code = *Tᵣₑₛ* ∗ *detout*.

When code = 0, it can be considered that the rising edges of the clocks of die1 and die2 are aligned, that is, the clock skew is close to 0.

*detout* In some possible embodiments, *detout* may be a 7-bit signal, i.e. deout [6: 0], the highest bit being the sign bit, and the output range being (- 64, 63). If the rising edge of the detin _ rf terminal signal is earlier than the rising edge of the detin _ fb terminal signal (Tdelay > 0), the output of the clock phase difference detection module (deout [6: 0]) is a positive value. If the rising edge of the detin _ rf terminal signal is later than the rising edge of the detin _ fb terminal signal (Tdelay < 0), the output of the clock phase difference detection module (deout [6: 0]) is a negative value. The relationship between the detin _ rf terminal, the detin _ rf terminal signal and the output value of the clock phase difference detection module is shown in Figure 6. *Tdelay* represents the rising edge delay between the two signals at the detin _ fb terminal and the detin _ rf terminal.

Here, the output bit of deout is not limited to 7 bits in the above example, and may be other bits, such as 8 bits, 6 bits, etc. The clock phase difference detection module employs a circuit or device used for detecting clock phase difference in the prior art.

In some embodiments, the clock phase difference detection module is further configured to detect a phase difference between a frequency divided signal and a delayed signal of the target reference signal to obtain a second detection value. Wherein, the delayed signal is obtained by delaying the frequency division signal by N times the clock cycle of the target reference signal, and N is a positive number greater than 0. The second detection value is used to determine the detection accuracy of the clock phase difference detection module.

The process of configuring the clock phase difference detection module to detect the phase difference between the frequency division signal and the delay signal of the target reference signal to obtain the second detection value may be referred to as a calibration process of the clock phase difference detection module. In actual products, the manufacturing process, manufacturing process angle, temperature, and voltage of the chip may all be different. These factors will affect the detection accuracy of the clock phase difference detection module (such as *Tᵣₑₛ*). Therefore, when using the clock phase difference detection module, it is necessary to calibrate the clock phase difference detection module first to obtain the detection accuracy. In the calibration mode, the period of the target reference signal input to the detin _ rf terminal is defined as *T_{clk}*. The target reference signal is usually a high-speed clock, and the low-speed clock (such as represented by calclk) is obtained by frequency division. For example, the high-speed clock is divided by 16 to obtain the low-speed clock. The frequency division signal is then delayed by N times *T_{clk}* using the clock period of the target reference signal to obtain the delayed signal (such as represented by calclk _ d). After that, the phase difference between calclk _ d and calclk is detected by using the clock phase difference detection module, and the second detection value is output, if represented by calout, there is: $calout = \frac{N ∗ {T}_{clk}}{{T}_{res}} , that is , {T}_{res} = \frac{N ∗ {T}_{clk}}{calout} ,$ when $N = 1 , {T}_{res} = \frac{{T}_{clk}}{calout} .$

In some possible embodiments, the clock synchronization system described above may further include a control module. The control module is respectively connected to the clock phase difference detection module, the first clock adjustment link and the second clock adjustment link. The control module is configured to adjust the phase delay of the first clock adjustment link and/or the first clock adjustment link according to the first detected value to synchronize the phases of the first clock signal and the second clock signal.

When adjusting the phase delay of the first clock adjustment link and/or the second clock adjustment link to synchronize the phases of the first clock signal and the second clock signal, the control module controls the first clock adjustment link to increase the phase delay and/or controls the second clock adjustment link to decrease the phase delay, if the first clock signal leads the phase of the second clock signal; if the first clock signal lags behind the phase with respect to the second clock signal, the first clock adjustment link is controlled to decrease the phase delay, and/or the second clock adjustment link is controlled to increase the phase delay.

The control module may be provided in the first chip or in the second chip. If the clock phase difference detection module is located on the first chip and the control module is located on the second chip, the clock phase difference detection module may be connected to the control module through a cross-chip transmission circuit.

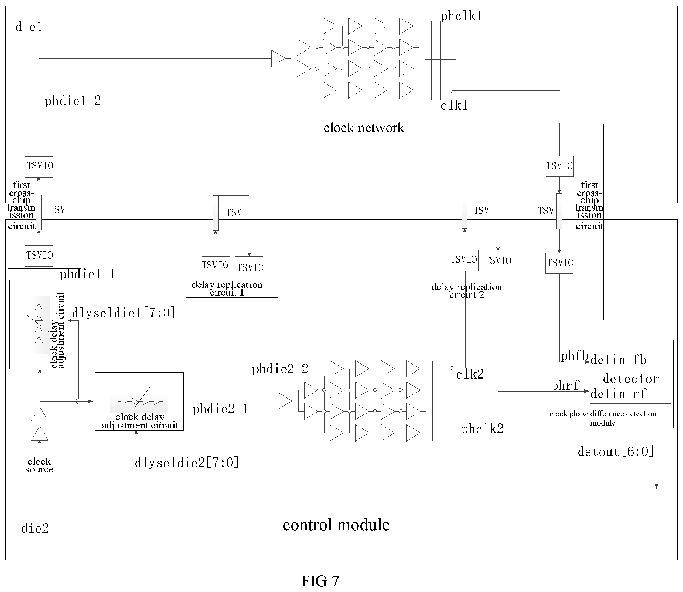

In some possible embodiments, the schematic diagram of the cross-chip clock synchronization system provided by the embodiment of the present application may be as shown in FIG. 7. FIG. 7 is only one example of many embodiments of the clock synchronization system of the present application. In the example shown in FIG. 7, the control module and the clock phase difference detection module are both located in die2. The configuration of the delay copy circuit in FIG. 7 is the same as that of the first cross-chip transfer circuit, and the implementation of the delay copy circuit is not limited thereto. In the power-on state, the control words of dlyseldie1 [7: 0] and dlyseldie2 [7: 0] can be defaulted to 0. By introducing the delay copy circuit 1, the phase alignment of phdie1 _ 2 and phdie2 _ 2 under the power-on default control word can be ensured, and the convergence time of the negative feedback adjustment loop can be reduced. Introducing the delay replication circuit 2 ensures that the delay of phclk1 to phfb is very close to the delay of phclk2 to phrf. In this way, the input phase difference (phfb - phrf) of the clock phase difference detection module is approximately equal to the phase difference between the two clock meshes (phclk1-phclk2), so that only one clock phase difference detection module can accurately detect the phase difference between the two clock meshes.

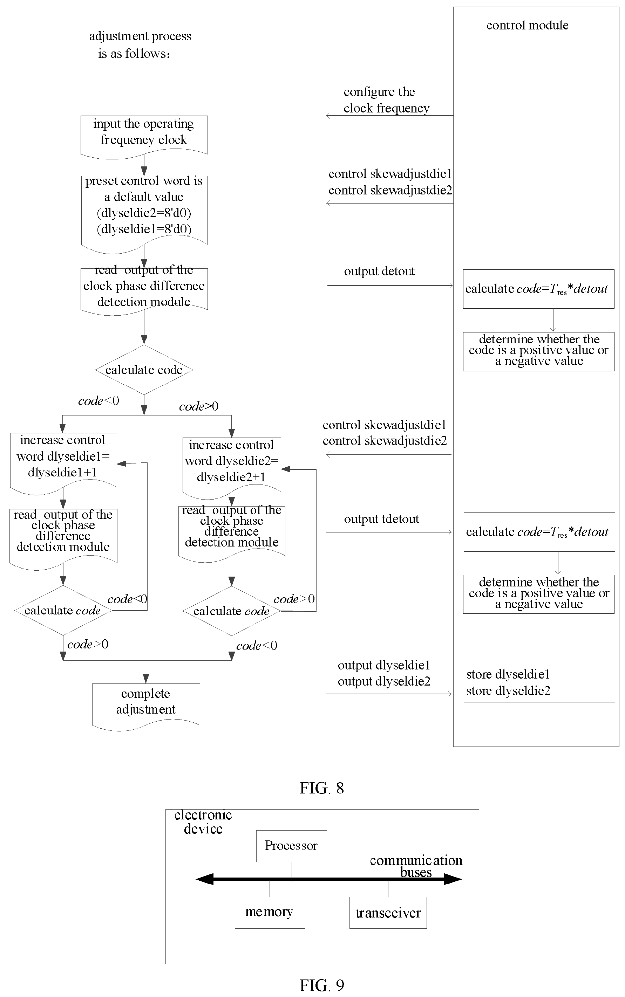

When the clock skew is reduced, the adjustment principle is shown in FIG. 8, and the control words of dlyseldie1 [7: 0] and dlyseldie2 [7: 0] may be set to 0 first, and detect the initial phase difference between the first clock signal and the second clock signal under the default control word: ${ph}_{clk 1} - {ph}_{clk 2} = {T}_{res} ∗ detout , define code = {T}_{res} ∗ detout .$

After that, the code is calculated and it is determined whether its value is positive or negative. If the initial value of code is greater than 0, it indicates that the phase of clk2 leads the phase of clk1, and it is necessary to gradually increase dlyseldie2 [7: 0] to gradually increase the delay of the second clock delay adjustment circuit, and calculate the value of code in real time, and when code changes from positive to negative, the adjustment ends. If the initial value of code is less than 0, it indicates that the phase of clk2 lags behind the phase of clk1, and it is necessary to gradually increase dlyseldie1 [7: 0] to gradually increase the delay of the first clock delay adjustment circuit, and calculate the value of code in real time, and when code changes from negative value to positive value, the adjustment ends.

In FIG. 8, skewadjustdie1 represents the first clock delay adjustment circuit, and skewadjustdie2 represents the second clock delay adjustment circuit. In some possible embodiments, in the initial state, the control words of dlyseldie1 [7: 0], dlyseldie2 [7: 0] may also be set to the maximum value, after which if the initial value of code is greater than 0, it indicates that the phase of clk2 leads the phase of clk1, dlyseldie1 [7: 0] needs to be gradually reduced to gradually reduce the delay of the first clock delay adjustment circuit, and the value of code is calculated in real time, and the adjustment ends when code changes from a positive value to a negative value. If the initial value of code is less than 0, it indicates that the phase of clk2 lags behind that of clk1, and it is necessary to gradually reduce dlyseldie2 [7: 0] to gradually reduce the delay of the second clock delay adjustment circuit, and calculate the value of code in real time, and when code changes from negative value to positive value, the adjustment ends.

The above-described control module may be implemented by a controller in the related art, and in one embodiment, the controller may be a Finite State Machine (FSM).

The embodiment of the present application also provides a chip, which includes the first chip, the second chip and a clock synchronization system, wherein the first clock adjustment link in the clock synchronization system is cross connected between the first chip and the second chip. In some possible ways, the second clock adjustment link in the clock synchronization system may also be cross connected between the first chip and the second chip.

In some possible embodiments, the chip may be a processor, wherein the first chip and the second chip respectively correspond to different functional modules in the processor. The processor may be a data processing core such as a GPU (Graphics Processing Unit), a CPU (Central Processing Unit), an AI (Artificial Intelligence), an NPU (Neural network Processing Unit), an ISP (Image Signal Processor), a DPU (Display Processing Unit), a VPU (Video Processing Unit), a DSP (Digital Signal Processor), or a processor chip used in scenarios such as large-scale data operation. The foregoing is merely an example and should not be construed as a limitation of the present application.

The implementation principle and technical effect of the clock synchronization system provided by the chip embodiment are the same as those of the aforementioned clock synchronization system embodiment, and for the sake of brief description, the corresponding contents of the aforementioned clock synchronization system embodiment may be referred to for points not mentioned in the chip embodiment.

The embodiment of the present application also provides an electronic device, the electronic device including the above-described clock synchronization system. In some possible embodiments, as shown in FIG. 9, FIG. 9 shows a structural block diagram of an electronic device provided by an embodiment of the present application. The electronic device includes a transceiver, a memory, a communication bus and a processor. The processor may be the above-described chip.

The transceiver, the memory and the processor are directly or indirectly electrically connected to each other to realize data transmission or interaction. For example, these elements may be electrically connected to each other by one or more communication buses or signal lines. The transceiver is configured to transmit and receive data. The memory is used to store a computer program, wherein the computer program comprises at least one software functional module which can be stored in the memory in the form of software or Firmware or solidified in an Operating System (OS) of the electronic device. The processor is configured to execute software functional modules or computer programs stored in the memory.

Among them, the memory may be, but is not limited to, a Random Access Memory (RAM), a Programmable Read-Only Memory (PROM), an Erasable Programmable Read-Only Memory (EPROM), an electrically erasable read-only memory (EEPROM), or the like.

A processor may be an integrated circuit chip that has the processing power of signals. The processor described above may be a general-purpose processor, including a Central Processing Unit (CPU), a Network Processor (NP), a graphics processor (GPU), an accelerated processor (Accelerated Processing Unit), a Multimedia Application Processor (MAP), a microprocessor, and the like; It may also be a Digital Signal Processor (DSP), an Application Specific Integrated Circuit (ASIC), a Field Programmable Gate Array (FPGA) or other programmable logic device, a discrete gate or transistor logic device, or a discrete hardware component. Alternatively, the processor may be any conventional processor or the like.

Among them, the above-mentioned electronic devices include but are not limited to mobile phones, tablets, notebooks, servers, etc.

It should be noted that each embodiment in the present specification is described in a stepwise manner, and each embodiment focuses on differences from other embodiments, and the same and similar parts among the embodiments may be referred to each other.

In addition, in each embodiment of the present application, each functional module may be integrated together to form an independent part, each module may exist alone, or two or more modules may be integrated to form an independent part.

The above is merely a specific embodiment of the present application, but the scope of protection of the present application is not limited thereto, and any person skilled in the art can easily think of changes or substitutions within the technical scope disclosed in the present application, and should be covered within the scope of protection of the present application. Therefore, the scope of protection of the present application should be subject to the scope of protection of the claims.

## Claims

1. A cross-chip clock synchronization system, comprising:
a first clock adjustment link configured to adjust a phase delay of an input clock signal and generate a first clock signal based on an adjusted input clock signal; the first clock adjustment link is cross connected between two chips, and the first clock adjustment link includes a first cross-chip transmission circuit, the first cross-chip transmission circuit is used for transmitting a target clock signal and/or the first clock signal, the target clock signal is the input clock signal or the adjusted input clock signal;
a second clock adjustment link configured to adjust a phase delay of the input clock signal and generate a second clock signal based on adjusted input clock signal; the second clock adjustment link includes a delay replication circuit, a transmission delay of the first cross-chip transmission circuit is consistent with a transmission delay of the delay replication circuit;
a clock phase difference detection module respectively connected to the first clock adjustment link and the second clock adjustment link, the clock phase difference detection module is configured to detect a phase difference between the first clock signal and the second clock signal to obtain a first detection value; the first detection value is used to adjust a phase delay of the first clock adjustment link and/or the second clock adjustment link to synchronize the phases of the first clock signal and the second clock signal.

2. The clock synchronization system according to claim 1, wherein the two chips comprise: a first chip and a second chip; the clock phase difference detection module is located in the second chip, the second chip is configured to generate the input clock signal, and the first clock adjustment link includes two first cross-chip transmission circuits, wherein one of the first cross-chip transmission circuits is configured to transmit the target clock signal, and the other of the first cross-chip transmission circuits is configured to transmit the second clock signal.

3. The clock synchronization system according to claim 2, wherein the first clock adjustment link includes a first clock delay adjustment circuit, one of the first cross-chip transmission circuits, the first clock network, and the other of the first cross-chip transfer circuits connected in sequence; or the first clock adjustment link includes one of the first cross-chip transmission circuits, a first clock delay adjustment circuit, a first clock network, and the other of the first cross-chip transmission circuits connected in sequence; the first clock delay adjustment circuit is configured to adjust a phase delay of an input clock signal;
the first clock network is configured to generate the first clock signal based on the adjusted input clock signal.

4. The clock synchronization system according to claim 3, wherein the second clock adjustment link includes a second clock delay adjustment circuit, one of the delay replication circuits, a second clock network, the other of the delay replication circuits connected in sequence; or the second clock adjustment link includes one of the delay replication circuits, a second clock delay adjustment circuit, a second clock network, and the other of the delay replication circuits connected in sequence;
the second clock delay adjustment circuit is configured to adjust a phase delay of an input clock signal;
the second clock network is configured to generate the second clock signal based on the adjusted input clock signal.

5. The clock synchronization system according to claim 1, wherein the two chips comprise: a first chip and a second chip; the clock phase difference detection module is located in the first chip, and the second chip is used to generate the input clock signal; the second clock adjustment link is cross connected between two chips, and the delay replication circuit is a second cross-chip transmission circuit, and the second cross-chip transmission circuit is used to transmit the second clock signal.

6. The clock synchronization system according to claim 1, wherein a reference clock input terminal of the clock phase difference detection module is configured to receive the second clock signal, and a feedback clock input terminal of the clock phase difference detection module is configured to receive the first clock signal;
if a product of the first detection value and the detection accuracy of the clock phase difference detection module is a positive value, indicating that the phase of the second clock signal leads the phase of the first clock signal;
if a product of the first detection value and the detection accuracy of the clock phase difference detection module is a negative value, indicating that the phase of the second clock signal lags behind with respect to the phase of the first clock signal.

7. The clock synchronization system according to claim 6, wherein the clock phase difference detection module is further configured to detect a phase difference between a frequency division signal and a delay signal of the target reference signal so as to obtain a second detection value; the delayed signal is obtained by delaying the frequency division signal by N times the clock cycle of the target reference signal, and N is a positive number greater than 0; the second detection value is used to determine the detection accuracy of the clock phase difference detection module.

8. The clock synchronization system according to any one of claims 1 to7, wherein the clock synchronization system further comprises:
a control module connected to the clock phase difference detection module, the first clock adjustment link and the second clock adjustment link, respectively, the control module is configured to adjust the phase delay of the first clock adjustment link and/or the first clock adjustment link according to the first detection value so as to synchronize phases of the first clock signal and the second clock signal.

9. A chip comprising: a first chip, a second chip, and the clock synchronization system according to any one of claims 1-8, a first clock adjustment link in the clock synchronization system spanning the first chip, the second chip.

10. An electronic device comprising the chip of claim 9.
